(19) Europäisches Patentamt
European Patent Office
Office européen des brevets

(11) Veröffentlichungsnummer: **0 180 758**
**A1**

# (12) EUROPÄISCHE PATENTANMELDUNG

(21) Anmeldenummer: **85112286.1**

(22) Anmeldetag: **27.09.85**

(51) Int. Cl.⁴: **C 08 G 18/79**
C 08 G 18/80, C 08 G 18/65

(30) Priorität: **02.10.84 DE 3436098**

(43) Veröffentlichungstag der Anmeldung:
**14.05.86 Patentblatt 86/20**

(84) Benannte Vertragsstaaten:
**BE DE FR GB IT NL SE**

(71) Anmelder: **BASF Aktiengesellschaft**
**Carl-Bosch-Strasse 38**
**D-6700 Ludwigshafen(DE)**

(72) Erfinder: **Werner, Frank, Dr.**
**Erschigweg 9**
**D-6730 Neustadt(DE)**

(72) Erfinder: **Marx, Matthias, Dr.**
**Seebacher Strasse 49**
**D-6702 Bad Duerkheim(DE)**

(72) Erfinder: **Schmidt, Hans Ulrich**
**Wredestrasse 53**
**D-6700 Ludwigshafen(DE)**

## (54) Verfahren zur Herstellung von gegebenenfalls zelligen Polyurethan-Polyharnstoff-Formkörpern unter Verwendung von Urethan- und Isocyanuratgruppen enthaltenden 2,4- und/oder 2,6-Toluylen-diisocyanaten.

(57) Die Erfindung betrifft ein Verfahren zur Herstellung von zellhaltigen oder kompakten Polyurethan-Polyharnstoff-Formkörpern durch Umsetzung von

a) Urethan- und Isocyanuratgruppen enthaltenden 2,4- und/oder 2,6-Toluylen-diisocyanaten mit einem NCO-Gehalt von 45 bis 28 Gew.-%, bezogen auf das Gesamtgewicht,

b) höhermolekularen Verbindungen mit mindestens zwei reaktiven Wasserstoffatomen und

c) aromatischen Diaminen in Gegenwart von

d) Katalysatoren und gegebenenfalls

e) niedermolekularen mehrwertigen Polyhydroxylverbindungen,

f) Treibmitteln,

g) Hilfsmitteln und/oder Zusatzstoffen

als one shot-Systeme nach der Reaktionsspritzgußtechnik in geschlossenen Formwerkzeugen.

Durch die Verwendung von mit Urethan- und Isocyanuratgruppen modifizierten 2,4- und/oder 2,6-Toluylendiisocyanatmischungen als Polyisocyanatkomponente konnte die Fließfähigkeit der Reaktionsmischung verbessert werden, ohne daß die mechanischen Eigenschaften der erhaltenen Formkörper dadurch beeinträchtigt werden.

EP 0 180 758 A1

Croydon Printing Company Ltd.

Verfahren zur Herstellung von gegebenenfalls zelligen Polyurethan-Polyharnstoff-Formkörpern unter Verwendung von Urethan- und Isocyanuratgruppen enthaltenden 2,4- und/oder 2,6-Toluylen-diisocyanaten

Die Herstellung von vernetzten Kunststoffen nach dem Isocyanat-Polyadditionsverfahren ist bekannt. Nach Angaben der DE-AS 11 96 864 (US 3 099 516) werden hierzu Hydroxylgruppen aufweisende Verbindungen und Polyisocyanate in Gegenwart von Treibmitteln und Katalysatoren in Formen verschäumt.

Bei geeigneter Wahl der Hydroxylgruppen aufweisenden Polyester, Polyether, Polyesteramide u.a. und organischen Polyisocyanate sowie durch zusätzliche Mitverwendung von Kettenverlängerungsmitteln, wie Glykolen oder Diaminen, können nach dieser Methode sowohl elastische wie starre Polyurethane sowie alle dazwischen liegenden Modifikationen hergestellt werden.

Zur Herstellung der Polyurethanelastomeren werden nach DE-PS 831 604 (US 2 778 810) aus den hydroxylgruppenhaltigen Verbindungen und Polyisocyanaten zunächst NCO-gruppenhaltige Präpolymere hergestellt, die dann in einer zweiten Stufe mit dem Kettenverlängerungsmittel zum hochmolekularen Elastomeren umgesetzt werden.

Diamine als Kettenverlängerungsmittel konnten im allgemeinen nicht nach dem one-shot-Verfahren verarbeitet werden. Nach Angaben der DE-AS 11 49 523 (US 3 105 062) werden den flüssigen, NCO-gruppenhaltigen Präpolymeren kristalline, aromatische primäre Diamine in einer zur Absättigung der Isocyanatgruppen unzureichenden Menge bei einer unter dem Schmelzpunkt der Diamine liegenden Temperatur einverleibt und danach die Massen durch Wärmezufuhr ausgehärtet. Gemäß DE-PS 12 40 654 (US 3 428 610) werden die NCO-gruppenhaltigen Präpolymeren bei Raumtemperatur oder mäßig erhöhten Temperaturen mit solchen flüssigen oder gelösten aromatischen Diaminen umgesetzt, die in o-Stellung zur ersten Aminogruppe mindestens einen linearen Alkylsubstituenten und zur zweiten Aminogruppe zwei lineare Alkylsubstituenten mit 1 bis 3 C-Atomen aufweisen.

Ein Verfahren zur Herstellung von gegebenenfalls zelligen, elastischen Formkörpern mit einer geschlossenen Oberflächenschicht aus Polyurethan--Polyharnstoff-Elastomeren nach dem Prinzip der Reaktionsspritzgußtechnik (RIM) wird in der DE-AS 26 22 951 (US 4 218 543) beschrieben. Die genannten Systeme bestehen im wesentlichen aus organischen Polyisocyana-

M/AS

ten, Polyolen, reaktiven aromatischen Di- bzw. Polyaminen, die in o-Stellung zur Aminogruppe durch Alkylgruppen substituiert sind und starken Katalysatoren für die Reaktion zwischen Hydroxyl- und Isocyanatgruppen. Wesentlich hierbei ist, daß die aromatischen Di- bzw. Polyamine in jedem Verhältnis mit Polyolen des Molekulargewichts 12000 bis 1800 mischbar sind, die Alkylsubstituenten 1 bis 3 Kohlenstoffatome aufweisen, wobei mindestens zwei der Alkylsubstituenten 2 bis 3 Kohlenstoffatome besitzen und jede der o-Stellungen zu den Aminogruppen substituiert ist. Derartige Systeme besitzen Startzeiten bis herab zu weniger als einer Sekunde; der Übergang der flüssigen in die feste Phase erfolgt nahezu schlagartig, was dazu führt, daß das flüssige Reaktionsgemisch in der Form an deren Wandungen gleichsam erstarrt.

Es ist ferner bekannt, daß die Reaktivität von aromatisch gebundenen Aminogruppen gegenüber Isocyanaten durch elektronenanziehende Substituenten stark vermindert werden kann. Beispiele für derartige aromatische Diamine sind nach DE-PS 12 16 538 (GB-PS 981 935) 3,3'-Dichlor-4,4'-diamino-diphenylmethan, 3,3'-Dinitro-4,4'-diamino-diphenylmethan und 3,3'-Dichlor-4,4'-diamino-diphenyl, deren Verarbeitung aus gesundheitsschädlichen Bedenken aufwendige und erschwerende Auflagen erfordert. Durch die stark elektronegativen Substituenten dieser Verbindungen wird jedoch die Reaktivität der aromatisch gebundenen Aminogruppen so stark herabgesetzt, daß die Durchhärtung bei nach der Reaktionsspritzgußtechnik hergestellten Formkörpern bis zu 15 Minuten erfordert und damit unwirtschaftlich wird.

Polyurethan-Polyharnstoff-Formulierungen mit im Vergleich zu Systemen gemäß DE-AS 26 22 951 etwas verminderter Reaktivität werden nach Angaben der EP-OS 26 915 erhalten, wenn man als aromatische Diamine 3,3',5,5'-tetraalkylsubstituierte 4,4'-Diaminodiphenylmethane verwendet, in denen die Alkylreste gleich oder verschieden sind und einen Methyl-, Ethyl-, Isopropyl-, sek.- oder tert.-Butylrest bedeuten, wobei mindestens einer der Substituenten ein Isopropyl- oder sek.-Butylrest sein muß. Die beschriebenen tetraalkylsubstituierten Diaminodiphenylmethane sind mit den Polyolen in den erforderlichen Mengen bei Raumtemperatur sehr gut mischbar und zeigen nur eine geringe oder gar keine Kristallisationsneigung, so daß die Formulierungen unter den für konventionelle RIM-Systeme üblichen Bedingungen gut handhabbar sind. Es zeigte sich jedoch auch, daß die beschriebenen tetraalkylsubstituierten 4,4'-Diamino-diphenylmethane für spezielle Anwendungen zu wenig reaktiv sein können.

Im Vergleich zu EP-OS 26 915 etwas reaktivere Polyurethan-Polyharnstoff-Formulierungen werden in der EP-OS 69 286 beschrieben. Als aromatische Diamine verwendet werden trialkylsubstituierte meta-Phenylendiamine, wobei zwei der Alkylsubstituenten gleich oder verschieden und lineare oder verzweigte Alkylreste mit 1 bis 4 C-Atomen sind und der 3. Alkylrest 4 bis 12 C-Atome aufweist oder ein fünf- oder sechsgliedriger Cycloalkylrest ist. Die Formulierungen weisen selbst bei einem relativ hohen Gehalt an Diaminen eine ausreichende Fließfähigkeit auf und ergeben Formkörper mit einer hohen Wärmeformbeständigkeit, die keinen progressiven Abfall der Schubmodulkurven zwischen 100 und 200°C zeigen.

Bekannt ist ferner die Verwendung von Isocyanatgruppen enthaltenden Prepolymeren und Quasiprepolymeren mit NCO-Gehalten zwischen 9 und 31 Gew.-%, die unter Verwendung von gegebenenfalls modifiziertem 4,4'-Diphenylmethan-diisocyanat hergestellt wurden, aus den US-Patentschriften 4 048 105, 4 102 833 und 4 374 210.

Nach den bekannten Verfahren werden als organische Polyisocyanate praktisch ausschließlich 4,4'-Diphenylmethan-diisocyanat oder bei Raumtemperatur flüssige Carbodiimid- oder Urethangruppen enthaltende Polyisocyanatmischungen auf Basis von 4,4'-Diphenylmethan-diisocyanat eingesetzt, da auf analoge Weise unter Verwendung von nichtmodifizierten Toluylendiisocyanaten hergestellte Formkörper keine ausreichende Anfangsfestigkeit (greenstrength) zeigten, zu langsam durchhärteten und ein unzureichendes mechanisches Eigenschaftsniveau aufwiesen. Die Reaktivität der RIM-Systeme versuchte man durch Auswahl geeigneter substituierter aromatischer Diamine und Katalysatoren den Erfordernissen, z.B. Geometrie des Formwerkzeugs, anzupassen. Nachteilig an dieser Methode ist jedoch, daß die eingesetzten aromatischen Diamine nicht nur die Reaktivität der RIM-Systeme, sondern auch die mechanischen Eigenschaften der erhaltenen Formkörper beeinflussen, so daß Formkörper mit bestimmten Raumformen beispielsweise nicht oder nur mit verminderten mechanischen Eigenschaften hergestellt werden konnten, da die erforderlichen reaktionsfähigen Polyurethanmischungen nicht ausreichend fließfähig sind.

Die Aufgabe der vorliegenden Erfindung bestand darin, die Fließfähigkeit von reaktionsfähigen Polyurethan-Polyharnstoff-Systemen zu verbessern, ohne daß hierbei die mechanischen Eigenschaften der erhaltenen Formkörpern, z.B. solchen auf Diphenylmethan-diisocyanatbasis, beeinträchtigt werden. Wesentlich war ferner zur Erziehung kurzer Entformungszeiten, z.B. von 3 bis 60 Sekunden, daß die hergestellten Formkörper eine ausreichende Anfangsfestigkeit besaßen.

Diese Aufgabe konnte überraschenderweise durch die Verwendung von modifizierten Toluylen-diisocyanaten gelöst werden.

Gegenstand der Erfindung ist somit ein Verfahren zur Herstellung von zellhaltigen oder kompakten Polyurethan-Polyharnstoff-Formkörpern durch Umsetzung von

a) modifizierten organischen Polyisocyanaten,
b) höhermolekularen Verbindungen mit mindestens zwei reaktiven Wasserstoffatomen und
c) aromatischen Diaminen
in Gegenwart von
d) Katalysatoren und gegebenenfalls
e) niedermolekularen mehrwertigen Polyhydroxylverbindungen
f) Treibmitteln,
g) Hilfsmitteln und/oder Zusatzstoffen

als one shot-Systeme nach der Reaktionsspritzgußtechnik in geschlossenen Formwerkzeugen, das dadurch gekennzeichnet ist, daß man als modifizierte organische Polyisocyanate (a) Urethan- und Isocyanuratgruppen enthaltende 2,4- und/oder 2,6-Toluylen-diisocyanate mit einem NCO-Gehalt von 45 bis 28 Gew.-%, bezogen auf das Gesamtgewicht, verwendet.

Das erfindungsgemäße Verfahren weist den Vorteil auf, daß alkylsubstituierte aromatische Diamine, die in RIM-Formulierungen mit gegebenenfalls modifizierten 4,4'-Diphenylmethan-diisocyanaten nahezu schlagartig reagieren, bei der Umsetzung mit den erfindungsgemäß verwendbaren Urethan- und Isocyanuratgruppen enthaltenden Polyisocyanatmischungen auf Basis von 2,4- und/oder 2,6-Toluylen-diisocyanaten eine verminderte Reaktivität zeigen und dadurch eine verlängerte Fließfähigkeit ergeben. Formwerkzeuge mit komplizierter Geometrie können dadurch relativ problemlos gefüllt werden. Durch Modifizierung der Toluylen-diisocyanate mit Urethan- und Isocyanuratgruppen konnten die mit nicht modifiziertem Toluylen-diisocyanaten verbundenen Nachteile bei der Formkörperherstellung eliminiert werden. Die hergestellten Formkörper besitzen die erforderliche Anfangsfestigkeit und zeigen eine hervorragende Wärmeformbeständigkeit bei einem hohen Elastizitätsmodul.

Besonders augenfällig sind die Vorteile des erfindungsgemäßen Verfahrens, wenn als aromatische Diamine (c) spezielle Mischungen aus sterisch gehinderten und hochreaktiven primären aromatischen Diaminen eingesetzt werden, die Formkörper mit selbsttrennenden Eigenschaften ergeben, so daß auf eine Behandlung des Formwerkzeugs mit äußeren Trennmitteln und/oder

den Zusatz von üblicherweise die Lackierbarkeit beeinträchtigende, inneren Trennmitteln praktisch vollständig verzichtet werden kann.

Zu den für das erfindungsgemäße Verfahren verwendbaren Aufbaukomponenten (a) bis (d) und gegebenenfalls (e), (f) und (g) ist folgendes auszuführen:

(a) Die als modifizierte organische Polyisocyanate geeigneten Urethan- und Isocyanuratgruppen enthaltenden Polyisocyanatmischungen aus 2,4- oder 2,6-Toluylendiisocyanat oder vorzugsweise Mischungen aus 2,4- und 2,6-Toluylen-diisocyanat im Gewichtsverhältnis von 82 bis 63 zu 18 bis 37, vorzugsweise 80 bis 65 zu 20 bis 35, besitzen einen NCO-Gehalt von 45 bis 28 Gew.-%, vorzugsweise 43 bis 32 Gew.-% und enthalten vorteilhafterweise 0,1 bis 12 Gew.-%, vorzugsweise 1 bis 5 Gew.-% Urethangruppen und 3,2 bis 15 Gew.-%, vorzugsweise 3,5 bis 10 Gew.-% Isocyanuratgruppen, wobei die Gew.-%, bezogen sind auf das Gesamtgewicht der modifizierten Toluylen-diisocyanatmischung.

Zur Einführung der Urethangruppen werden 2,4- und/oder 2,6-Toluylen-diisocyanate oder die entsprechenden Isocyanuratgruppen enthaltenden Toluylen-diisocyanatmischungen zweckmäßigerweise partiell mit niedermolekularen Diolen mit 2 bis 12 C-Atomen, vorzugsweise 2 bis 6 C-Atomen im Alkylenrest und/oder Polyoxyalkylenglykolen mit Molekulargewichten von 106 bis ungefähr 700, vorzugsweise 106 bis ungefähr 250, auf Basis von Ethylenoxid, 1,2-Propylenoxid oder Ethylenoxid-1,2-Propylenoxidmischungen bei Temperaturen von beispielsweise 40 bis 90°C zur Reaktion gebracht. Als niedermolekulare Diole oder Polyoxyalkylenglykole seien beispielhaft genannt: Ethan-, 1,2-, 1,3-Propan-, 1,3-, 1,4-Butan-, 1,5-, 1,3-Pentan-, 1,6-Hexan-, 1,8-Octan-, 1,10-Decan-, 1,12-Dodecan-, 2,2-Dimethyl-1,3-propan-, 2,2,4,4-Tetramethyl-1,6-hexan-, 2-Ethyl-1,6-hexandiol, Diethylenglykol, Triethylenglykol, oligomere Polyoxyethylenglykole, Tripropylenglykol, oligomere Polyoxypropylenglykole, oligomere Polyoxypropylen-polyoxyethylen-glykole und vorzugsweise Dipropylenglykol.

Zur Herstellung der Urethan- und Isocyanuratgruppen enthaltenden 2,4- und/oder 2,6-Toluylen-diisocyanate eignen sich die an sich bekannten Verfahren. Wie bereits dargelegt wurde, können Isocyanuratgruppen enthaltende 2,4- und/oder 2,6-Toluylen-diisocyanate, zweckmäßigerweise solche mit einem NCO-Gehalt von 45,1 bis 28,1 Gew.-%, direkt mit entsprechenden Diol- und/oder Polyoxyalkylen-glykolmengen zur Bildung der Urethangruppen umgesetzt werden. Nach einer anderen Verfahrensvariante können Urethangruppen enthaltende 2,4- und/oder

2,6-Toluylendiisocyanate, zweckmäßigerweise solche mit einem NCO-Gehalt von 48,2 bis 31,2 Gew.-% in Gegenwart von üblichen Trimerisiekatalysatoren, wie z.B. Tris-(N,N-dialkylaminoalkyl)-hexahydrotriazinen oder 2,4,6-Tris-(N,N-dimethylamino)-phenol, bei Temperaturen von 70 bis 150°C partiell cyclisiert werden. Nach Erreichung des gewünschten Gehalts an Isocyanuratgruppen werden die Katalysatoren nach bekannten Methoden, z.B. durch Zusatz von organischen oder anorganischen Säuren, Säurechloriden, Lewissäuren u.a. desaktiviert. Vorzugsweise werden die Urethan- und Isocyanuratgruppen enthaltende 2,4- und/oder 2,6-Toluylen-diisocyanate jedoch durch Mischen in den entsprechenden Mengenverhältnissen von Urethangruppen enthaltenden 2,4- und/oder 2,6-Toluylen-diisocyanaten zweckmäßigerweise mit einem NCO-Gehalt von 46 bis 20 Gew.-% und Isocyanuratgruppen enthaltenden 2,4- und/oder 2,6-Toluylen-diisocyanaten zweckmäßigerweise mit einem NCO-Gehalt von 46 bis 22 Gew.-% bei Temperaturen von 70 bis 90°C hergestellt. Zur Einstellung des erfindungsgemäß genannten NCO-Gehalts von 45 bis 28 Gew.-% können die Urethangruppen und Isocyanuratgruppen enthaltenden 2,4- und/oder 2,6-Toluylen-diisocyanate gegebenenfalls mit monomeren 2,4-und/oder 2,6-Toluylen-diisocyanaten nachträglich verdünnt werden.

(b) Als höhermolekulare Verbindungen (b) mit mindestens zwei reaktiven Wasserstoffatomen werden zweckmäßigerweise solche mit einer Funktionalität von 2 bis 8, vorzugsweise 2 bis 4 und einem Molekulargewicht von 1000 bis 8000, vorzugsweise von 1200 bis 6000 verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20-35 : 35-50 : 20-32 Gew.Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. -Caprolacton, oder Hydroxycarbonsäuren, z.B. -Hydroxycapronsäure.

Die Polyester-polyole besitzen vorzugsweise eine Funktionalität von 2 bis 3 und ein Molekulargewicht von 1.000 bis 3.000 und vorzugsweise 1.800 bis 2.500.

Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und bei der anionischen Polymerisation unter Mitverwendung eines Startermoleküls, das 2 bis 8, vorzugsweise 2 bis 4, reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle für die anionische Polymerisation kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan.

Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Saccharose.

Die Polyether-polyole besitzen vorzugsweise eine Funktionalität von 2 bis 4 und Molekulargewichte von 1.000 bis 8.000, vorzugsweise 1.200 bis 6.000 und insbesondere 1.800 bis 4.000. Sie können ebenso wie die Polyester-polyole einzeln oder in Form von Mischungen verwendet werden. Ferner können sie mit den Polyester-polyolen sowie den hydroxylgruppenhaltigen Polyesteramiden, Polyacetalen, Polycarbonaten und/oder Polyether-polyaminen gemischt werden.

Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen gesättigten und/ oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die Aminierung von Polyoxyalkylen-polyolen mit Aminen oder

0180758

Ammoniak in Gegenwart von Wasserstoff und Katalysatoren (DE 12 15 373).

c) Als aromatische Diamine (c) kommen beim erfindungsgemäßen Verfahren primäre aromatische Diamine in Betracht, deren Aminogruppen gegenüber modifizierten Polyisocyanaten durch mindestens einen orthoständigen Alkylsubstituenten zu jeder Aminogruppe sterisch behindert sind.

Zur Herstellung von selbsttrennenden RIM-Formulierungen haben sich jedoch insbesonders Diaminmischungen bewährt, so daß diese vorzugsweise Anwendung finden, aus

c) 80 bis 50 Gew.-%, vorzugsweise 78 bis 65 Gew.-% mindestens eines primären, sterisch behinderten aromatischen Diamins (c) und

ci) 20 bis 50 Gew.-%, vorzugsweise 22 bis 35 Gew.-% mindestens eines unsubstituierten oder substituierten primären aromatischen Diamins, dessen Aminogruppen gegenüber modifizierten Polyisocyanaten keine durch elektronenanziehende Substituenten und/oder sterische Hinderung verursachte verminderte Reaktivität zeigen, wobei die Gew.-% bezogen sind auf das Gesamtgewicht der Mischung aus (c) und (ci).

Insbesondere geeignet sind primäre aromatische Diamine (c) und (ci), die bei Raumtemperatur flüssig und mit der Komponente (b) unter den Verarbeitungsbedingungen ganz oder zumindest teilweise mischbar sind.

Als primäre aromatische Diamine (c) finden vorzugsweise alkylsubstituierte meta-Phenylendiamine der Formeln

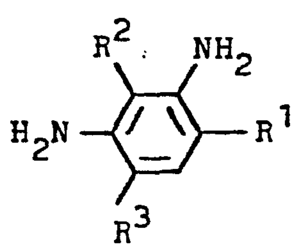

und/oder

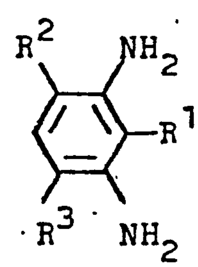

Verwendung, in denen $R^1$ ein Wasserstoffatom oder ein linearer oder verzweigter Alkylrest mit 1 bis 12 Kohlenstoffatomen, vorzugsweise 1 bis 6 Kohlenstoffatomen ist und $R^2$ und $R^3$ gleiche oder verschiedene, lineare oder verzweigte Alkylreste mit 1 bis 4 Kohlenstoffatomen,

wie z.B. ein Methyl-, Ethyl-, Propyl-, Isopropyl-, Butyl- oder sek. Butylrest sind.

Geeignet sind insbesondere verzweigte Alkylreste $R^1$ mit 4 bis 12 Kohlenstoffatomen, bei denen die Verzweigungsstelle am $C_1$-Kohlenstoffatom sitzt. Neben Wasserstoff seien als Alkylreste $R^1$ beispielhaft genannt: der Methyl-, Ethyl-, n- und iso-Propyl-, Butyl-, Hexyl-, Octyl-, Decyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n--propylrest.

Als alkylsubstituierte m-Phenylendiamine kommen beispielsweise in Betracht: 2,4-Dimethyl-, 2,4-Diethyl-, 2,4-Diisopropyl-, 2,4-Diethyl-6--methyl-, 2-Methyl-4,6-diethyl-, 2,4,6-Triethyl-, 2,4-Dimethyl-6-cyclohexyl-, 2-Cyclohexyl-4,6-diethyl-, 2-Cyclohexyl-2,6-diisopropyl-, 2,4-Dimethyl-6-(1-ethyl-n-propyl)-, 2,4-Dimethyl-6-(1,1-dimethyl--n-propyl)- und 2-(1-Methyl-n-butyl)-4,6-dimethyl-phenylendiamin-1,3.

Bewährt haben sich ferner alkylsubstituierte Diamino-diphenylmethane, wie z.B. 3,3'-di- und 3,3',5,5'-tetra-n-alkylsubstituierte 4,4'-Diamino-diphenylmethane wie z.B. 3,3'-Diethyl-, 3,3',5,5'-Tetraethyl- und 3,3',5,5'-Tetra-n-propyl-4,4'-diamino-diphenylmethan.

Anwendung finden vorteilhafterweise Diamino-diphenylmethane der Formel

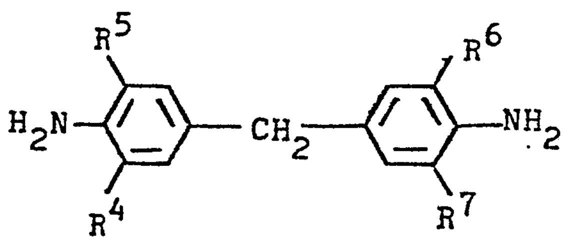

in der $R^4$, $R^5$, $R^6$ und $R^7$ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die alkylsubstituierten 4,4'-Diamino-diphenylmethane können auch im Gemisch mit Isomeren der Formeln

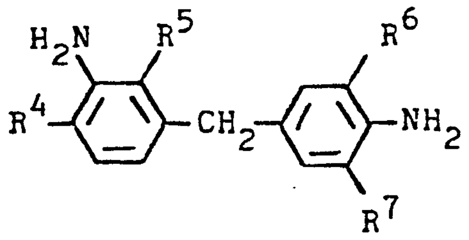

und/oder

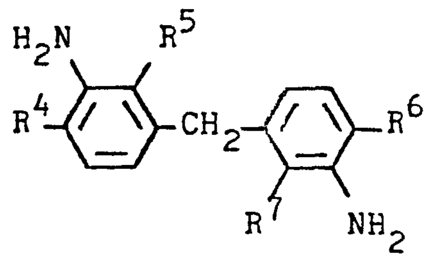

verwendet werden, wobei $R^4$, $R^5$, $R^6$ und $R^7$ die obengenannte Bedeutung haben.

Beispielhaft genannt seien: 3,3',5-Trimethyl-5'-isopropyl-, 3,3',5-Triethyl-5'-isopropyl-, 3,3',5-Trimethyl-5'-sek.-butyl-, 3,3',5-Triethyl-5'-sek.-butyl-4,4'-diamino-diphenylmethan, 3,3'-Dimethyl-5,5'-diisopropyl-, 3,3'-Diethyl-5,5'-diisopropyl-, 3,3'-Dimethyl-5,5'-di-sek.-butyl-, 3,3'-Diethyl-5,5'-di-sek.-butyl-, 3,5-Dimethyl-3',5'-diisopropyl-, 3,5-Diethyl-3',5'-diisopropyl-, 3,5-Dimethyl-3',5'-di-sek.-butyl-, 3,5-Diethyl-3',5'-di-sek.-butyl-4,4'-diamino-diphenylmethan, 3-Methyl-3',5,5'-triisopropyl-, 3-Ethyl-3',5,5'-triisopropyl-, 3-Methyl-3',5,5'-tri-sek.-butyl-, 3-Ethyl-3',5,5'-tri-sek.-butyl-4,4'-diamino-diphenylmethan, 3,3'-Diisopropyl-5,5'-di-sek.-butyl-, 3,5-Diisopropyl-3',5'-di-sek.-butyl-, 3-Ethyl-5-sek.-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetraisopropyl- und 3,3',5,5'-Tetra-sek.-butyl-4,4'-diaminodiphenylmethan. Vorzugsweise verwendet werden folgende primären aromatischen Diamine: 2,4-Diethyl-, 2,4-Dimethyl-phenylendiamin-1,3, 2,4,6-Triethyl-phenylendiamin-1,3, 2,4-Dimethyl-6-tert.-butyl-, 2,4-Dimethyl-6-isooctyl- und 2,4-Dimethyl-6-cyclohexyl-phenylendiamin-1,3 sowie 3,5-Dimethyl-3',5'-diisopropyl- und 3,3',5,5'-Tetraisopropyl-4,4'-diamino-diphenylmethan und insbesondere 6-Methyl-2,4-diethyl- und/oder 2-Methyl-4,6-diethyl-phenylendiamin-1,3.

Die primären aromatischen Diamine können einzeln oder in Form von Mischungen, beispielsweise aus alkylsubstituierten 1,3-Phenylendiaminen, 3,3'-di- und/oder 3,3',5,5'-tetraalkylsubstituierten 4,4'-Diamino-diphenylmethanen eingesetzt werden. Außerdem können die primären aromatischen Diamine mit maximal 50 Gew.%, bezogen auf das Gesamtgewicht, primären alkylsubstituierten aromatischen Tri- bis Pentaminen, wie z.B. Polyphenyl-polymethylen-polyaminen gemischt sein, wobei die aromatischen Polyamine mindestens in einer o-Stellung zu den Aminogruppen mit einem Alkylrest substituiert sind.

Als Diaminkomponente (ci) werden vorzugsweise unsubstituierte primäre aromatische Diamine verwendet. Geeignet sind jedoch auch substituierte primäre aromatische Diamine, zweckmäßigerweise monoalkylsubstituierte aromatische Diamine, bei denen die Reaktivität der Aminogruppen durch den Substituenten nicht negativ beeinflußt wird. Im einzelnen seien beispielhaft genannt: 1,2-, 1,3- und 1,4-Phenylendiamin, Benzidin, 4,4'- und 2,4'-Diaminodiphenylmethan, 4,4'-Diamino-diphenylether, Naphthylen-1,5-diamin, Naphthylen-1,8-diamin, 3,4-, 2,4- und 2,6-Toluylen-diamin. Die aromatischen Diamine (ci) können ebenso wie die aromatischen Diamine (c) einzeln oder in Form von Mischungen eingesetzt werden. Vorzugsweise Anwendung finden 2,4- und/oder 2,6-Toluylendiamin und insbesondere 1,3-Phenylen-diamin.

Als aromatische Diamine haben sich besonders bewährt und werden daher vorzugsweise Mischungen verwendet aus

(c) 80 bis 50 Gew.% 2,4-Dimethyl-6-tert.-butyl-phenylendiamin-1,3 und insbesondere 6-Methyl-2,4-diethyl- und/oder 2-Methyl-4,6--diethyl-phenylendiamin-1,3 und

(ci) 20 bis 50 Gew.-% 2,4- und/oder 2,6-Toluylen-diamin und insbesondere 1,3-Phenylendiamin, wobei die Gew.-% bezogen sind auf das Gesamtgewicht der Mischung aus den Komponenten (c) und (ci),

da hierbei die zellhaltigen oder kompakten Polyurethan-Polyharnstoff-Formkörper in Abwesenheit von äußeren Formtrennmitteln hergestellt werden können.

Die aromatischen Diamine (c) oder vorzugsweise die Mischung aus den aromatischen Diaminen (c) und (ci) kommt beim erfindungsgemäßen Verfahren in Mengen von 5 bis 50 Gew.-Teilen, vorzugsweise 10 bis 40 Gew.-Teilen und insbesondere 15 bis 30 Gew.-Teilen, bezogen auf 100 Gew.-Teile der Komponente (b), zur Anwendung.

(d) Als Katalysatoren (d) werden insbesondere Verbindungen verwendet, die die Reaktion der Hydroxylgruppen enthaltenden Verbindungen der Komponenten (b) und (e) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat. Die organischen

Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin. Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.% Katalysator bzw. Katalysatorkombination, bezogen auf das Gewicht der Komponente (b).

(e) Zur Herstellung der zellhaltigen oder kompakten Polyurethan-Polyharnstoff-Formkörper werden neben den aromatischen Diaminen (c) vorzugsweise zusätzlich niedermolekulare, mehrwertige Polyhydroxylverbindungen (e) eingesetzt.

Als niedermolekulare, mehrwertige Polyhydroxylverbindungen finden die an sich bekannten Kettenverlängerungsmittel und/oder Vernetzer mit einer Funktionalität von 2 bis 4, vorzugsweise 2 und Molekulargewichten kleiner als 500, vorzugsweise von 62 bis ungefähr 400 Verwendung. In Betracht kommen beispielsweise aliphatische und/oder araliphatische Diole mit 2 bis 14, vorzugsweise 2 bis 6 Kohlenstoffatomen, wie z.B. Ethan-, 1,2-, 1,3-Propan-, 1,4-Butan-, 1,5-Pentan-, 1,6-Hexan-, 1,8-Octan-, 1,10-Decan-, 1,12-Dodecan-diol und Bis-(2-hydroxyethyl)-hydrochinon, Triole wie z.B. Glycerin und Trimethylolpropan und Tetrole wie z.B. Pentaerythrit sowie oligomere Polyoxyalkylen-polyole auf Basis Ethylen- und/oder 1,2-Propylenoxid und den vorgenannten mehrwertigen Alkoholen als Startermoleküle wie z.B. Diethylen-glykol, Triethylen-glykol, Dipropylen-glykol, Tripropylen-glykol, alkoxilierte Glycerine und alkoxilierte Trimethylolpropane. Vorzugsweise verwendet werden Ethan-, 1,4-Butan-, 1,6-Hexan-diol, Glycerin und Trimethylolpropan.

Die niedermolekularen, mehrwertigen Polyhydroxylverbindungen (e) können einzeln oder in Form von Mischungen eingesetzt werden, wobei pro 100 Gew.-Teilen der Komponente (b) zweckmäßigerweise 5 bis 50 Gew.-Teile der Komponente (c) und 0,1 bis 20 Gew.-Teile, vorzugsweise 1 bis 10 Gew.-Teile der Komponente (e) verwendet werden.

(f) Zu Treibmitteln (f), welche im erfindungsgemäßen Verfahren gegebenenfalls verwendet werden können, gehört Wasser, das mit Isocyanatgruppen unter Bildung von Kohlendioxid reagiert. Die Wassermengen, die zweckmäßigerweise verwendet werden können, betragen 0,01 bis 5 Gew.-%, vorzugsweise 0,5 bis 2 Gew.%, bezogen auf das Gewicht der Komponente (b).

Andere verwendbare Treibmittel sind niedrigsiedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-2,2,2-trifluorethan.

Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen Polyurethan-Polyharnstoff-Formkörpern hängt ab von der Dichte, die man erreichen will sowie gegebenenfalls von der Mitverwendung von Wasser. Im allgemeinen liefern Mengen von 0,5 bis 15 Gew.Teilen, bezogen auf 100 Gew.Teile der Komponente (b) zufriedenstellende Ergebnisse.

Der Reaktionsmischung können gegebenenfalls auch noch Hilfsmittel und/oder Zusatzstoffe (g) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin oder stearinsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Komponente (b), angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyetherolen analog den Angaben der deutschen Patentschriften 11 11 394, 12 22 669, (US 3 304 273, 3 383 351, 3 523 093) 11 52 536 (GB 1 040 452) und 11 52 537 (GB 987 618) hergestellt und danach gegebenenfalls aminiert werden sowie Filler-polyoxyalkylen-polyole oder -polyamine, bei denen wäßrige Polymerdispersionen in Polyoxyalkylen-polyol- oder -polyamindispersionen übergeführt werden.

Die anorganischen und organischen Füllstoffe können einzeln oder als Gemische verwendet werden. Vorzugsweise Anwendung finden stabile Füllstoff-Polyoxyalkylen-polyol-Dispersionen, bei denen die Füllstoffe in Gegenwart von Polyoxyalkylen-polyolen in situ mit hohen örtlichen Energiedichten auf eine Teilchengröße kleiner als 7 µm zerkleinert und hierbei gleichzeitig dispergiert werden.

Die anorganischen und organischen Füllstoffe werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), einverleibt.

Geeignete Flammschutzmittel sind beispielsweise Trikresylphosphat, Tris-2-chlorethylphosphat, Tris-chlorpropylphosphat und Tris-2,3-dibrompropyl-phosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat zum Flammfestmachen der Formkörper verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponente (b) zu verwenden.

Nähere Angaben über die obengenannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964 oder dem Kunststoff-Handbuch, Band VII, Polyurethane, Carl Hanser Verlag, München, 1966 bzw. 1983 zu entnehmen.

Zur Herstellung der gegebenenfalls zelligen Polyurethan-Polyharnstoff-Formkörper werden die modifizierten organischen Polyisocyanate (a), höhermolekularen Verbindungen mit mindestens zwei reaktiven Wasserstoffatomen (b), aromatischen Diamine (c) und gegebenenfalls niedermolekularen, mehrwertigen Polyhydroxylverbindungen (e) in solchen Mengen zur Umsetzung gebracht, daß das Äquivalenz-Verhältnis von NCO-Gruppen der modifizierten Polyisocyanate (a) zur Summe der reaktiven Wasserstoffatome der Komponenten (b), (c) und gegebenenfalls (e) 1:0,90 bis 1,25, vorzugsweise 1:0,98 bis 1,15 beträgt.

Die Herstellung der zellhaltigen und vorzugsweise kompakten Polyurethan-Polyharnstoff-Formkörper erfolgt nach dem one shot-Verfahren mit Hilfe der bekannten Reaktionspritzguß-Technik. Diese Verfahrensweise wird beispielsweise beschrieben von Piechota und Röhr in "Integralschaumstoff", Carl Hanser Verlag, München, Wien 1975; D.J. Prepelka und J.L.Wharton in Journal of Cellular Plastics, März/April 1975, Seiten 87 bis 98 und U. Knipp in Journal of Cellular Plastics, März/April 1973, Seiten 76 bis 84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die primären aromatischen Diamine (c) und niedermolekularen, mehrwertigen Polyhydroxylverbindungen (e) in den höhermolekularen Verbindungen mit mindestens zwei reaktiven Wasserstoffatomen (b) zu lösen und gegebenenfalls mit Treibmitteln, Hilfs- und Zusatzstoffen in der Komponente (A) zu vereinigen und als Komponente (B) die modifizierten organischen Polyisocyanate zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Die Menge des in das Formwerkzeug eingebrachten Reaktionsgemisches wird so bemessen, daß die erhaltenen kompakten Formkörper eine Dichte von 1,0 bis 1,4 g/cm$^3$, vorzugsweise von 1,0 bis 1,2 g/cm$^3$ und die zellhaltigen Formkörper eine Dichte von 0,7 bis 1,2 g/cm$^3$, vorzugsweise von 0,8 bis 1,0 g/cm$^3$ aufweisen. Die Ausgangskomponenten werden mit einer Temperatur von 15 bis 80°C, vorzugsweise von 20 bis 55°C in das Formwerkzeug eingebracht. Die Formwerkzeugtemperatur beträgt zweckmäßigerweise 20 bis 90°C, vorzugsweise 30 bis 75°C. Die Verdichtungsgrade zur Herstellung der mikrozellularen oder zellhaltigen Formkörper liegen zwischen 1,1 und 8, vorzugsweise zwischen 2 und 8.

Die nach dem erfindungsgemäßen Verfahren erhaltenen kompakten bzw. mikrozellularen Polyurethan-Polyharnstoff-Formkörper eignen sich insbesondere zur Verwendung in der Automobilindustrie, beispielsweise als Stoßstangenabdeckungen, Rammschutzleisten und Karosserieteile wie Regenrinnen, Kotflügel, Spoiler und Radkästenverbreiterungen sowie technische Gehäuseteile, Laufrollen und Schuhsohlen. Die zellhaltigen Schaumstoffe finden beispielsweise als Armlehnen, Kopfstützen, Sicherheitsabdeckungen im Automobilinnenraum sowie als Motorrad- und Fahrradsättel und Deckschichten in Verbundschaumstoffen Anwendung.

Die in den Beispielen genannten Teile beziehen sich auf das Gewicht.

Vergleichsbeispiel

Komponente A: Mischung aus

77,8 Teilen eines Polyoxypropylen-polyoxyethylen-triols mit einer OH-Zahl von 26, hergestellt durch anionische Polyaddition von zunächst 1,2-Propylenoxid und anschließend Ethylenoxid an Trimethylolpropan als Startermolekül.

21,0 Teilen einer Mischung aus 80 Gew.-Teilen 6-Methyl-2,4-diethyl-phenylendiamin-1,3 und 20 Gew.-Teilen 2-Methyl-4,6-diethyl-phenylendiamin-1,3,

1,0 Teilen 1,4-Diazabicyclo-(2,2,2)-octan in Dipropylenglykol (33 gew.-%ige Lösung) und

0,2 Teilen Dibutylzinndilaurat.

Komponente B: Mischung aus

2,4- und 2,6-Toluylen-diisocyanat im Gewichtsverhältnis 80:20 mit einem NCO-Gehalt von 48,3 Gew.-%.

Die Komponenten (A) und (B) wurden auf 50°C erwärmt und im Gewichtsverhältnis 100:25,7 Teilen - entsprechend einem Isocyanatindex von 1,05 - nach dem Reaktionsspritzguß-Verfahren auf einer Hochdruckdosieranlage vom Typ ®Puromat 30 der Elastogran-Maschinenbau GmbH gemischt und in einem auf 50°C temperierten Aluminiumformwerkzeug mit den Innenabmessungen 4x400x200 mm zu Formplatten verarbeitet. Das Formwerkzeug wurde nach 20 Sekunden geöffnet und die Härte der Formplatten in Abhängigkeit von der Zeit gemessen.

Die erhaltenen Meßergebnisse sind in Tabelle 1 zusammengefaßt.

Die erhaltene Formplatte wurde eine Stunde lang bei 120°C getempert. Danach wurden an der Formplatte folgende mechanischen Eigenschaften gemessen:

| | | |
|---|---|---|
| Rohdichte nach DIN 53 420 | [kg/m$^3$]: | 1090 |
| Reißfestigkeit nach DIN 53 504 | [N/mm$^2$]: | 19,5 |
| Reißdehnung nach DIN 53 504 | [%]: | 475 |
| Weiterreißfestigkeit nach Graves gemäß DIN 53 515 | [N/mm]: | 84 |
| Shore D-Härte nach DIN 53 505 | | 48 |
| Biege-E-Modul nach DIN 53 457 | [N/mm$^2$]: | 191 |
| Wärmeformbeständigkeit Iso-R-75, Methode B | [°C]: | 111 |

Beispiel 1

Komponente A: Mischung aus

72,7 Teilen des Polyoxypropylen-polyoxyethylen-triols mit einer OH-Zahl von 26 gemäß dem Vergleichsbeispiel,

21,0 Teilen der 6-Methyl-2,4-diethyl- und 2-Methyl-4,6-diethyl-phenylendiamin-1,3-mischung nach dem Vergleichsbeispiel,

5,0 Teilen eines Trimethylolpropan-Ethylenoxid-Addukts mit einer OH-Zahl von 945,

1,0 Teilen 1,4-Diazabicyclo-2,2,2-octan in Dipropylenglykol (33 gew.-%ige Lösung) und

0,3 Teilen Dibutylzinndilaurat.

Komponente B:

Modifiziertes Urethan- und Isocyanuratgruppen enthaltendes Polyisocyanatgemisch aus 2,4- und 2,6-Toluylen-diisocyanaten im Gewichtsverhältnis 80:20. Das Polyisocyanatgemisch besaß einen NCO-Gehalt von 40 Gew.-%, einen Urethangruppengehalt von 2,2 Gew.-% und einen Isocyanuratgruppengehalt von 4,4 Gew.-%, jeweils bezogen auf das Gesamtgewicht, und wurde hergestellt durch Umsetzung des Toluylen-diisocyanatgemisches mit Dipropylen-glycol bei 60°C, Eintragen von Tris-(N,N-dimethylaminopropyl)-s-hexahydrotriazin als Trimerisierungskatalysator, Trimerisieren bis zu einem NCO-Gehalt von 24 Gew.-%, wobei die Temperatur auf 130°C anstieg, und Mischen des erhaltenen Reaktionsprodukts mit Toluylen-diisocyanatgemisch auf den NCO-Gehalt von 40 Gew.-%.

Die Komponenten (A) und (B) wurden auf 50°C erwärmt, im Gewichtsverhältnis 100:40,1 Teilen - entsprechend einem Isocyanatindex von 1,05 - gemischt und analog den Angaben des Vergleichsbeispiels zu Formplatten verarbeitet.

An der erhaltenen Formplatte gemessen wurden analog dem Vergleichsbeispiel der Härteanstieg und nach Temperung von einer Stunde bei 120°C die mechanischen Eigenschaften.

| | | |
|---|---|---|
| Rohdichte nach DIN 53 420 | [$kg/m^3$]: | 1 070 |
| Reißfestigkeit nach DIN 53 504 | [$N/mm^2$]: | 26 |
| Reißdehnung nach DIN 53 504 | [%]: | 210 |
| Weiterreißfestigkeit nach Graves gemäß DIN 53 515 | [N/mm]: | 79 |
| Shore D-Härte nach DIN 53 505 | | 58 |
| Biege-E-Modul nach DIN 53 457 | [$N/mm^2$]: | 420 |
| Wärmeformbeständigkeit Iso-R-75, Methode B | [°C] | 118 |

Beispiel 2

Komponente A: Mischung aus

71,7 Teilen des Polyoxypropylen-polyoxyethylen-triols mit einer OH-Zahl von 26 gemäß dem Vergleichsbeispiel,

24,0 Teilen der 6-Methyl-2,4-diethyl- und 2-Methyl-4,6-diethyl-phenylen-diamin-1,3-Mischung nach dem Vergleichsbeispiel,

3,0 Teilen eines Trimethylolpropan-Ethylenoxid-Addukts mit einer OH-Zahl von 945,

1,0 Teilen 1,4- Diazabicyclo-2,2,2-octan in Dipropylenglycol (33 Gew.-%ige Lösung) und

0,3 Teilen Dibutylzinndilaurat.

Komponente B:

Urethan- und Isocyanuratgruppen enthaltendes Polyisocyanatgemisch aus 2,4- und 2,6-Toluylen-diisocyanaten nach Beispiel 1.

Die Komponenten (A) und (B) wurden auf 50°C erwärmt, im Gewichtsverhältnis 100:40,2 Teilen - entsprechend einem Isocyanatindex von 1,05 - gemischt und analog den Angaben des Vergleichsbeispiels zu Formplatten verarbeitet.

An der erhaltenen Formplatte gemessen wurden analog dem Vergleichsbeispiel der Härteanstieg und nach Temperung von einer Stunde bei 120°C die mechanischen Eigenschaften.

| | | |
|---|---|---|
| Rohdichte nach DIN 53 420 | [kg/m$^3$]: | 1058 |
| Reißfestigkeit nach DIN 53 504 | [N/mm$^2$]: | 21 |
| Reißdehnung nach DIN 53 504 | [%]: | 160 |
| Weiterreißfestigkeit nach Graves gemäß DIN 53 515 | [N/mm]: | 50 |
| Shore D-Härte nach DIN 53 505 | | 59 |
| Biege-E-Modul nach DIN 53 457 | [N/mm$^2$] | 440 |
| Wärmeformbeständigkeit Iso-R-75, Methode B | [°C] | 147 |

Lg-Nr. 9032021

Beispiel 3

Komponente A: Mischung aus

70,7 Teilen des Polyoxypropylen-polyoxyethylen-triols mit einer OH-Zahl von 26 gemäß dem Vergleichsbeispiel,

21,0 Teilen der 6-Methyl-2,4-diethyl- und 2-Methyl-4,6-diethyl-phenylendiamin-1,3-mischung nach dem Vergleichsbeispiel,

5,0 Teilen eines Trimethylolpropan-Ethylenoxid-Addukts mit einer OH-Zahl von 945,

2,0 Teilen m-Phenylendiamin

1,0 Teilen 1,4-Diazabicyclo-2,2,2-octan in Dipropylenglykol (33 gew.-%ige Lösung) und

0,3 Teilen Dibutylzinndilaurat.

Komponente B:

Urethan- und Isocyanuratgruppen enthaltendes Polyisocyanatgemisch aus 2,4- und 2,6-Toluylen-diisocyanaten nach Beispiel 1.

Die Komponenten (A) und (B) wurden auf 50°C erwärmt, im Gewichtsverhältnis 100:44,1 Teilen - entsprechend einem Isocyanatindex von 1,05 - gemischt und analog den Angaben des Vergleichsbeispiels zu Formplatten verarbeitet.

An der erhaltenen Formplatte gemessen wurden analog dem Vergleichsbeispiel der Härteanstieg und nach Temperatur von einer Stunde bei 120°C die mechanischen Eigenschaften.

| | | |
|---|---|---|
| Rohdichte nach DIN 53 420 | [kg/m$^3$]: | 1 109 |
| Reißfestigkeit nach DIN 53 504 | [N/mm$^2$]: | 23 |
| Reißdehnung nach DIN 53 504 | [%]: | 140 |
| Weiterreißfestigkeit nach Graves gemäß DIN 53 515 | [N/mm]: | 31 |
| Shore D-Härte nach DIN 53 505 | | 62 |
| Biege-E-Modul nach DIN 53 457 | [N/mm$^2$]: | 500 |
| Wärmeformbeständigkeit Iso-R-75, Methode B | [°C] | 139 |

Tabelle 1

Härte der Formplatten in Abhängigkeit von der Zeit ab Reaktionsstart

| | Vergl.-Beisp. | Beispiele 1 | 2 | 3 |
|---|---|---|---|---|
| [Sekunden] | Härte - Shore - D | | | |
| 30 | - | 31 | - | - |
| 40 | 13 | 34 | 38 | 38 |
| 50 | 16 | 35 | 39 | 40 |
| 60 | 18 | 36 | 41 | 43 |
| 90 | 20 | 40 | 43 | 46 |

Patentansprüche

1. Verfahren zur Herstellung von zellhaltigen oder kompakten Polyurethan-Polyharnstoff-Formkörpern durch Umsetzung von

a) modifizierten organischen Polyisocyanaten,
b) höhermolekularen Verbindungen mit mindestens zwei reaktiven Wasserstoffatomen und
c) aromatischen Diaminen
in Gegenwart von
d) Katalysatoren und gegebenenfalls
e) niedermolekularen mehrwertigen Polyhydroxylverbindungen
f) Treibmitteln,
g) Hilfsmitteln und/oder Zusatzstoffen

als one shot-Systeme nach der Reaktionsspritzgußtechnik in geschlossenen Formwerkzeugen, dadurch gekennzeichnet, daß man als modifizierte organische Polyisocyanate (a) Urethan- und Isocyanuratgruppen enthaltende 2,4- und/oder 2,6-Toluylen-diisocyanate mit einem NCO-Gehalt von 45 bis 28 Gew.-%, bezogen auf das Gesamtgewicht, verwendet.

2. Verfahren nach Anspruch 1, dadurch gekennzeichnet, daß die Urethan- und Isocyanuratgruppen enthaltende 2,4- und/oder 2,6-Toluylen-diisocyanate mit einem NCO-Gehalt von 45 bis 28 Gew.-% enthalten 0,1 bis 12 Gew.-% Urethangruppen und 3,2 bis 15 Gew.-% Isocyanuratgruppen, wobei die Gew.-% bezogen sind auf das Gesamtgewicht.

3. Verfahren nach Anspruch 1, dadurch gekennzeichnet, daß man als Toluylen-diisocyanate Mischungen aus 2,4- und 2,6-Toluylen-diisocyanat im Gewichtsverhältnis 82 bis 63 zu 18 bis 37 verwendet.

4. Verfahren nach Anspruch 1, dadurch gekennzeichnet, daß man zur Urethanmodifizierung der organischen Polyisocyanate Diole mit 2 bis 12 Kohlenstoffatomen im Alkylenrest und/oder Polyoxyalkylen-glykole mit Molekulargewichten von 106 bis 700 verwendet.

5. Verfahren nach Anspruch 1, dadurch gekennzeichnet, daß man als aromatische Diamine (c) 6-Methyl--2,4-diethyl- und/oder 2-Methyl-4,6-diethyl-phenylendiamin-1,3 verwendet.

6. Verfahren nach Anspruch 1, dadurch gekennzeichnet, daß man als aromatische Diamine Mischungen verwendet aus

c) 80 bis 50 Gew.-% mindestens eines primären aromatischen Diamins, dessen Aminogruppen gegenüber modifizierten Polyisocyanaten durch mindestens einen orthoständigen Alkylsubstituenten zu jeder Aminogruppe sterisch behindert sind und

ci) 20 bis 50 Gew.-% mindestens eines unsubstituierten oder substituierten primären aromatischen Diamins, dessen Aminogruppen gegenüber modifizierten Polyisocyanten keine durch elektronenanziehende Substituenten und/oder sterische Hinderung verursachte verminderte Reaktivität zeigen,

wobei die Gew.-% bezogen sind auf das Gesamtgewicht der Mischung (c) und (ci).

7. Verfahren nach Anspruch 1, dadurch gekennzeichnet, daß man die zellhaltigen oder kompakten Polyurethan-Polyharnstoff-Formkörper in Abwesenheit von äußeren Formtrennmitteln herstellt und als aromatische Diamine (c) Mischungen verwendet aus

80 bis 50 Gew.-% 2,4-Dimethyl-6-tert.butyl-, 6-Methyl-2,4-diethyl- und/oder 2-Methyl-4,6-diethyl-phenylen-diamin-1,3 und

20 bis 50 Gew.-% 1,3-Phenylendiamin, wobei die Gew.-% bezogen sind auf das Gesamtgewicht der Diaminmischung.

8. Verfahren nach Anspruch 1, dadurch gekennzeichnet, daß die niedermolekularen mehrwertigen Polyhydroxylverbindungen (e) eine Funktionalität von 2 bis 4 und ein Molekulargewicht von 62 bis 400 besitzen.

9. Verfahren nach Anspruch 1, dadurch gekennzeichnet, daß das Äquivalenzverhältnis von NCO-Gruppen der modifizierten organischen Polyisocyanate a) zur Summe der Hydroxyl- und Aminogruppen der Komponenten (b), (c) und gegebenenfalls (e) 1:0,90 bis 1,25 beträgt.

10. Verfahren nach Anspruch 1, dadurch gekennzeichnet, daß man pro 100 Gew.-Teilen der Komponente (b) 5 bis 50 Gew.-Teile der Komponente (c) und 0,1 bis 20 Gew.-Teile der Komponente (e) verwendet.

0180758

Europäisches Patentamt

**EUROPÄISCHER RECHERCHENBERICHT**

Nummer der Anmeldung

EP 85 11 2286

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
| Y | US-A-3 248 372 (W. BUNGE)<br>* Ansprüche 1,2,5; Spalte 4, Zeilen 3-8 *<br>--- | 1,3,5,9 | C 08 G 18/79<br>C 0G 1 8/80<br>C 08 G 18/65 |
| D,Y | EP-A-0 026 915 (BASF)<br>* Zusammenfassung; Seite 7, Zeile 28 - Seite 8, Zeile 35 *<br>--- | 1,3,5,9 | |
| Y | EP-A-0 017 928 (BAYER)<br>* Anspruch 1; Seite 15, Zeile 14 - Seite 16, Zeile 9 *<br>----- | 1,3,5,9 | |
| | | | RECHERCHIERTE SACHGEBIETE (Int. Cl 4) |
| | | | C 08 G |

Der vorliegende Recherchenbericht wurde für alle Patentansprüche erstellt

| Recherchenort | Abschlußdatum der Recherche | Prüfer |
|---|---|---|
| DEN HAAG | 04-02-1986 | VAN PUYMBROECK M.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82